# EUROPEAN PATENT SPECIFICATION

(11) **EP 2 242 553 B1**
(45) Date of publication and mention of the grant of the patent: **13.03.2013**
(21) Application number: 09701400.5
(22) Date of filing: 12.01.2009
(51) Int. Cl.: B01D 3/06, C02F 1/06, C02F 1/16

(54) **METHOD AND PLANT FOR THE DESALINATION OF SALT WATER USING MSF DESALINATION UNITS WITH AN IMPROVED BRINE RECIRCULATION SYSTEM**
VERFAHREN UND ANLAGE ZUR ENTSALZUNG VON SALZWASSER MITHILFE VON MSF-ENTSALZUNGSEINHEITEN MIT EINEM VERBESSERTEN LAUGENREZIRKULATIONSSYSTEM
PROCÉDÉ ET USINE DE DESSALEMENT DE L'EAU SALÉE AU MOYEN D'UNITÉS DE DESSALEMENT PAR DÉTENTES SUCESSIVES POURVUES D'UN SYSTÈME AMÉLIORÉ DE RECYCLAGE DE LA SAUMURE

(30) Priority: 11.01.2008 DE 102008004106
(43) Date of publication of application: 27.10.2010
(73) Proprietor: Babcock Borsig Service GmbH, 46049 Oberhausen (DE)
(72) Inventor: MASSARANI, Aldo, I-20124 Milan (IT)
(74) Representative: Cohausz & Florack
(86) International application number: PCT/EP2009/050256
(87) International publication number: WO 2009/087234

(56) References cited:
- JP-A- 55 111 889
- US-A- 3 312 601
- US-A- 3 431 179
- US-A- 3 692 634
- US-A- 3 734 835

## Description

The present invention relates to a method for the desalination of salt water using at least a brine heater, a desalination zone of multi-stage flash (MSF) distillation units and at least one deaerator and a plant for the desalination of salt water with at least a brine heater, a desalination zone of multi-stage flash (MSF) distillation units and at least one deaerator.

The preheated sea-water is pumped as a recirculation brine, into the heat recovery section, where the brine is gradually preheated inside the tube bundle by means of the condensation of the steam produced inside the evaporator shell. The condensed steam is collected as a distillate stream and pumped to downstreams plants / consumers.

Both a known method and a Multi-Stage Flash (MSF) plant for the known desalination of salt water are described in WO-A1-02/32813, providing a brine heater; providing at least one desalination zone (heat recovery section) comprising at least one condenser and means for collecting condensate from the condenser; providing at least one heat exchanger; supplying a feed stream comprising salt water as a coolant to the condenser to pre-heat the feed stream; supplying the pre-heated feed stream to the brine heater; supplying a first heating stream comprising steam to the brine heater further to heat the pre-heated feed stream; supplying the heated feed stream from the brine heater to the at least one desalination zone, evaporating at least a portion of the heated feed stream in the desalination zone to provide an evaporate comprising water vapour and condensing the evaporate in the desalination zone.

US-A-3 734 835 A discloses a multi-stage flash distillation process wherein at least some of the preheated feed liquid is diverted from the primary flow path to and along a bypass flow-path directly to an associated liquid zone. A secondary flow path serves as a bypass and communicates with the primary flow path and with the liquid zone of another chamber. A valve is associated with the secondary flow path for regulating the flow but the flow that runs through the secondary flow path does not enter the external heater but directly runs into the liquid zone of another chamber.

A multi-stage evaporator is shown and described in US-A-3 431 179 A. The evaporator has a bypass passage between two stages, said passage being provided with adjustable means for controlling the flow through the bypass passage. Since the bypass passage connects the lower portions instead of the upper portions, the bypassing brine does not necessarily enter the heater but may evaporate and be discharged before re-entering the brine heater.

Moreover, US-A-3 312 601 relates to multistage flash distillation comprising high temperature and low temperature stages. While the low temperature stages use brine as a condenser coolant, the high temperature stages use a water immiscible liquid like oil as a condenser. Here, it is shown to bypass at least one stage via a pipe. However, the brine that bypasses the first stage differs from the brine that enters the heat exchangers because of the fact that fresh cool brine is admitted through another pipe that merges with the first pipe *after* the bypassed stage. Accordingly, the brine bypassing the first stage differs from the brine that enters the heat exchangers in terms of brine concentration, purity, air content, temperature, etc. Claim 1 defines that the heat recovery section is at least partially bypassed by a part of the recirculating brine, wherein *said part* of the recirculating brine enters the brine heater. In other words, the bypass line is put *in parallel* to the other line.

Another known MSF-type desalination plant is described in US-PS 3 489 652, wherein heated sea water is passed through the flash chambers of a multi-stage flash evaporator which are maintained at successively lower pressures, is passed to a low-pressure turbine which is coupled to a generator for producing electric power, and the vapours produced in the other flash stages are condensed directly on the condenser tubes associated with these flash stages. The condensate is withdrawn from the evaporator to a cooler. The exhaust steam from a turbine is passed to a condenser, from which the condensate mixes with the distillate from the cooler, thus collecting the desired product, i.e. desalinated water, which is withdrawn from the system.

It is well known that the production (distillate output) of MSF desalination units is directly proportional to the "*brine recirculation flow*" and to the "*flash temperature range*" of the plant. In order to increase the production of existing desalination units considerably, it is necessary to increase the "*brine recirculation flow",* or the evaporator "*flash temperature range*", or both of the above mentioned parameters together.

As far as the "*flash temperature range*" is concerned, generally there are many limitations which don't permit anybody to achieve a higher value. Mainly these limitations are connected to the limitations of the *Top Brine Temperature* due to the scaling and corrosion problems which can affect the plant.

Consequently, the present invention is oriented to increase the desalination plant production through improvements in the brine recirculation circuit.

In order to increase the brine recycle flow, it is possible to utilize one of the already known methods: The modification of the pump impeller/s of the existing brine recycle pumps or of the flow control valves. Furthermore, it is possible to increase the pump speed using e.g. variable speed motors or to complete replace of the pump and motors with equipment of higher capacity. However, all these measures are costly and comprehensive and the physical limits of the hydraulic system are reached quite soon.

In addition, possible restrictions ("bottle necks"), if any, may be reduced or removed from the hydraulic circuit.

The present invention is therefore based on the object of developing and refining the method cited at the beginning and described in greater detail above in such a way that the "*Brine recirculation flow*" *-* and, consequently, the MSF performances of the existing desalination units - are increased. Another object is to minimize the economical impacts coming from the already known methods with an alternative method. A further object is to avoid increased velocity of the brine inside the heat exchanger tubes of the flash chambers. Furthermore, a plant being suitable for such a method has to be shown using only slight variations and without major intervention of the existing equipment. Moreover, retrofitting of existing plants should be possible.

In terms of method this object is solved by a method having the features specified in the preamble of claim 1 by that the heat recovery section is at least partially bypassed by a part of the recirculating brine wherein said part of the recirculating brine enters the brine heater. The invention has recognized that the increase of distillate output is obtained by only an additional flow of recirculating brine.

According to a further teaching of the invention, the bypass flow is being varied to control the flow rate of the bypassed brine.

Regarding the plant for the desalination of salt water the object is solved by a plant with at least a brine heater, a desalination zone of multi-stage flash (MSF) distillation units, and at least one elevator wherein the a desalination zone comprises a heat recovery section for condensing the steam (evaporated brine) and winning the distillate, characterized by providing at least one bypass line bypassing at least a part of the heat recovery section and entering the brine heater.

According to a further preferred embodiment of the plant according to the invention there are several bypass lines between different distillation units.

Regarding to another advantageous teaching according to this invention several bypass lines are arranged each between adjacent distillation units.

Alternatively, there is a separate bypass line for each single distillation unit. These bypass lines are not only functioning as a bypass line but are simultaneously reducing the temperature of cooling brine entering in the distillation units and, consequently, permit to recover additional heat in each heat recovery stage.

Another embodiment of the present invention can include an additional pump for the recirculating brine.

According to another advantageous embodiment of the plant according to this invention, at least one bypass line consists of a pipe, the inner diameter of which is variable for alterating the flow of the recirculating brine. This could be achieved by e.g. at least a valve, a perforated plate or the like located in each modified bypass pipe.

Further preferred and advantageous embodiments of the invention and especially of the method according to the invention are specified in the dependent claims and the drawings. Moreover, the present invention includes any variations and combinations of the described or illustrated embodiments. The present invention covers also, but is not limited to, all existing MSF desalination which can include or not a separated deaerator. The scope of this invention covers also the new desalination plants for which it is possible to find a lot of different additional benefits.

The present invention will be described in greater detail in the following on the basis of a drawing, which merely illustrates preferred exemplary embodiments, on the basis of which the function of the method according to the present invention and a respective plant will also be described in detail. In the drawing
- Fig. 1: shows a diagram showing the total dynamic head over the pump capacity (flow),
- Fig. 2: is a schematic view illustrating a typical hydraulic circuit,
- Fig. 3: is a schematic view illustrating another hydraulic circuit with a lower total friction resistance,
- Fig. 4: shows the diagram of Fig. 1 with a second circuit characteristic,
- Fig. 5: shows a schematic view of a MSF desalination unit and the hydraulic circuit of the brine recirculation pump according to the state of the art,
- Fig. 6: shows, more schematically, the hydraulic circuit of the brine recirculation system of Fig. 5,
- Fig. 7: shows the brine recirculation system of Fig. 6 with a bypass line bypassing the heat recovery tube section,
- Fig. 8: shows the brine recirculation system of Fig. 7 with the bypass line and an additional pump,

- Fig. 9: shows the brine recirculation system of Fig. 6 with a plurality of short bypass lines between two adjacent heat exchanger tubes,
- Fig. 10: shows the brine recirculation system of Fig. 9 with the bypass lines and an additional pump,
- Fig. 11: shows the brine recirculation system of Fig. 6 with a plurality of short bypass lines for each single heat exchanger tubes, and
- Fig. 12: shows the brine recirculation system of Fig. 11 with all bypass lines and an additional pump.

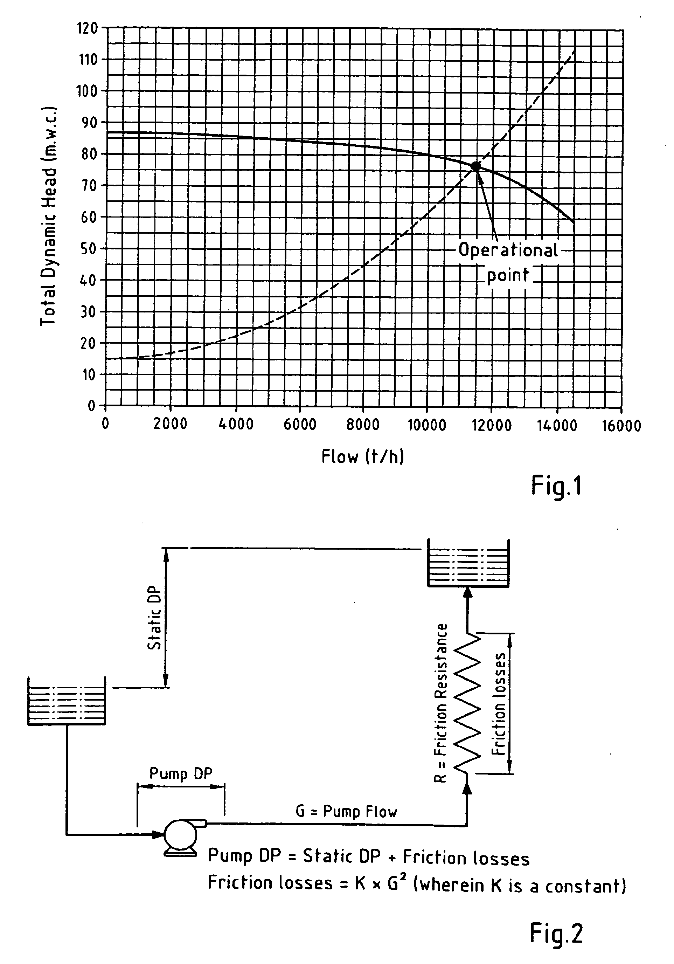

It is very well known also, from an engineering point of view, that in a hydraulic circuit, which includes one or more pumps, the operating point can be found at the intersection of the pump performance curve and the circuit characteristic curve, as shown in Fig. 1.

It goes without saying that the flow and the head shown in Fig. 1 are only indicative and that the following description and technical study should be applicable for any flow and head.

Fig. 2 shows a typical hydraulic circuit, in which can be seen that the Δp of the circuit is equal to the sum of two components:
- The first component is the static pressure difference between the suction basin and the delivery basin of the hydraulic circuit. This static pressure difference is a constant term which doesn't depend of the flow.
- The second component is due to the friction losses inside the circuit itself. These friction losses are equal to zero when the flow in the circuit is equal zero. This term normally will increase with the power two of flow, depending of the Reynolds number and other parameters.

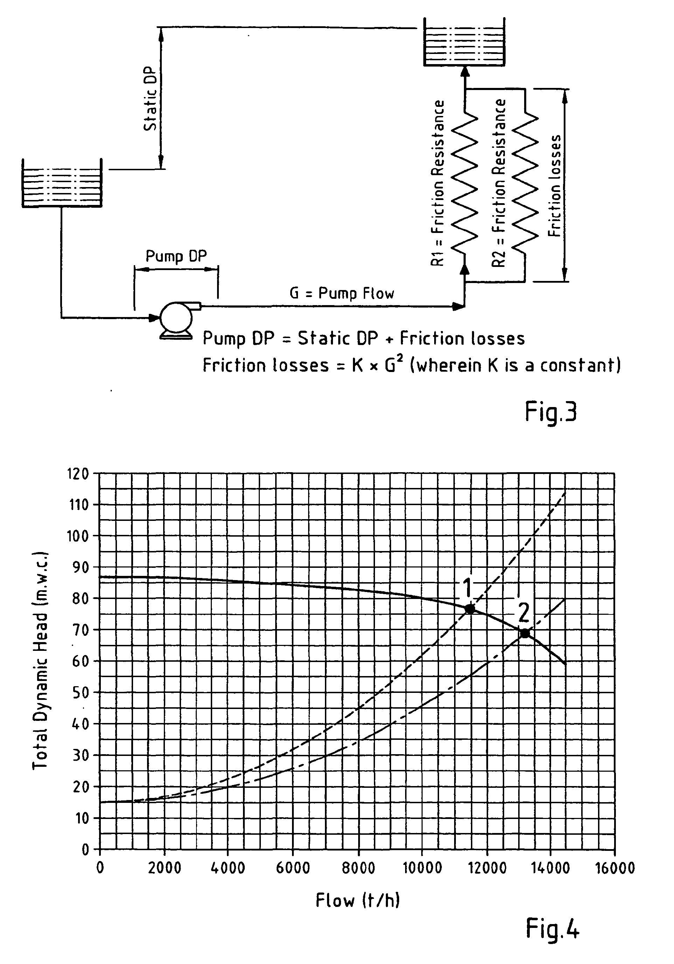

If another line is being put in parallel to the already existing friction resistance (having the same or a different friction resistance) as shown in Fig. 3, the total friction resistance will decrease because each line will take a portion of the pump flow and then the velocity in each circuit will be less than before.

The hydraulic effect of the circuit modification is shown in Fig. 4. There, it can be seen that the reduction of friction losses generates a circuit characteristic more flat than before, and that the pump/circuit operation point will move from point 1 to point 2 with an additional flow rate coming from the pump.

Starting from this theoretical engineering point of view, the new step is the application of the above theory to the MSF desalination plants minimizing the negative impact on both their efficiency and their G.O.R. (Gained Output Ratio in kg of distillate / kg of steam).

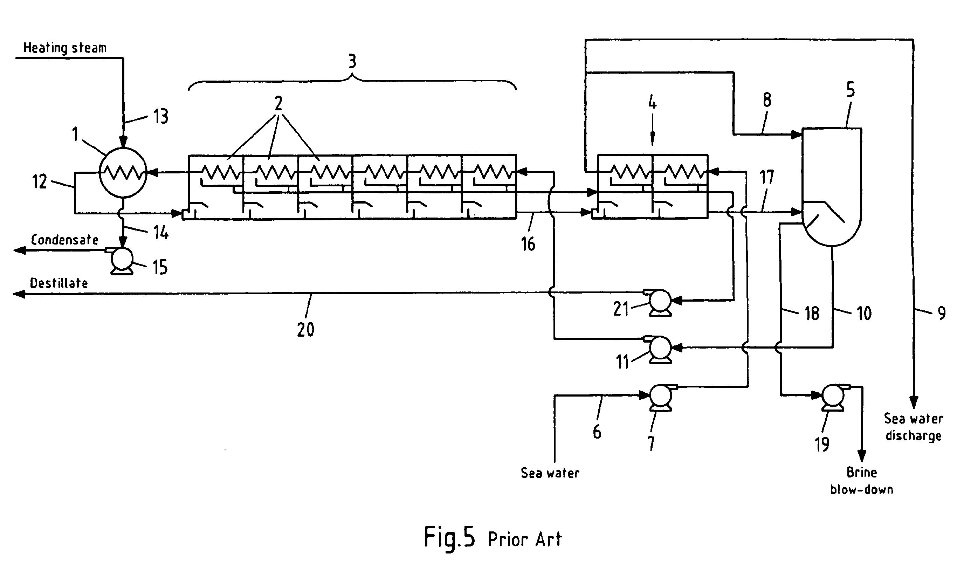

In Fig. 5, the schematic diagram of a MSF desalination unit according to the state of the art is shown. It comprises a brine heater 1, a desalination zone of multi-stage flash (MSF) distillation stages 2 being referred to as a heat recovery section 3, a heat rejection section 4 and (as an option) a deaerator 5, wherein the a desalination zone comprises for condensing the steam and winning the distillate.

Sea water is pumped through a line 6 by a pump 7 into the heat rejection section 4, and further fed as 'make-up' via line 8 into the deaerator 5. The concentrated brine is discharged via line 9.

The stream of brine and fresh sea-water is racked via line 10 by the brine recirculating pump 11 into the heat recovery section 3, cooling the different MSF distillation heat recovery stages 2. After having left the last unit 2 (on the left in Fig. 5), the brine is heated in the brine heater 1 and fed via line 12 back into the (most left) unit 2 of heat recovery section 3, and therefrom, in a reverse direction flow, into all other distillation stages 2.

The brine heater 1 is heated by means of steam coming via a line 13 from a (non-illustrated) heat source. The condensate in the brine heater 1 is drawn off via line 14 by the pump 15.

After having left the last unit 2 (on the right in Fig. 5), the flashing brine flows via line 16 into the heat rejection section 4, where further condensate is produced. Line 17 brings the brine back into the deaerator 5, from where the brine recirculating process continues. Excess brine is stripped out of the deaerator 5 via line 18 by the brine pump 19 and blown-off.

In the heat recovery section 3 and following in the heat rejection section 4, the steam coming from the brine is being condensed at the cold pipes and the collected distillate drawn off via line 20 by the distillate pump 21.

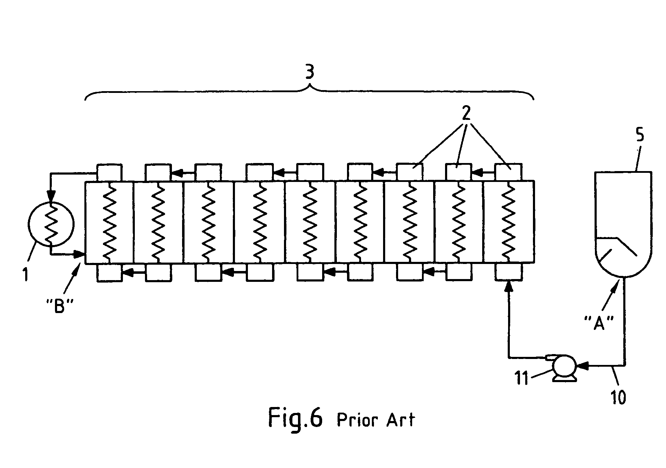

Limiting the point of interest to the hydraulic circuit of the brine recirculation system from the pump suction line 10 (Point "A", outlet of deaerator 5) up to the inlet of the first distillation unit 2 (*Point* "*B*"), the circuit is shown in Fig. 6.

Theoretically, if the friction factor of a circuit should be reduced, the number of heat exchanger tubes in each stage of the heat recovery section could be increased, but this is not practicable due to the costs involved and to reasons of feasibility.

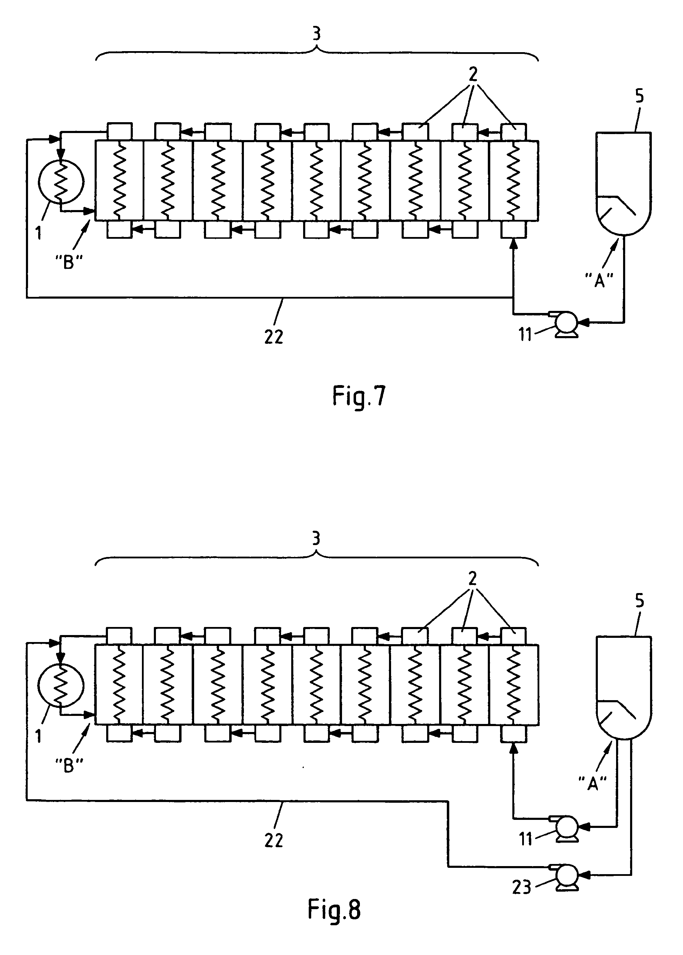

The basic scope of the present invention is to provide a bypass line 22 bypassing the heat recovery section 3 as shown in Fig. 7.

In case that the load of the existing brine recirculation pump 11 (or pumps) will exceed their capacity, an additional smaller pump 23 can be installed in parallel to the existing one, as illustrated in Fig. 8.

From the thermodynamic point of view, both solutions illustrated in Figs. 7 and 8 would cause a very high reduction of the MSF desalination efficiency (G.O.R.) due to the lower brine temperature entering into the brine heater. This means that the advantages of a possible additional water production would be achieved by a too high and unacceptable reduction of desalination efficiency.

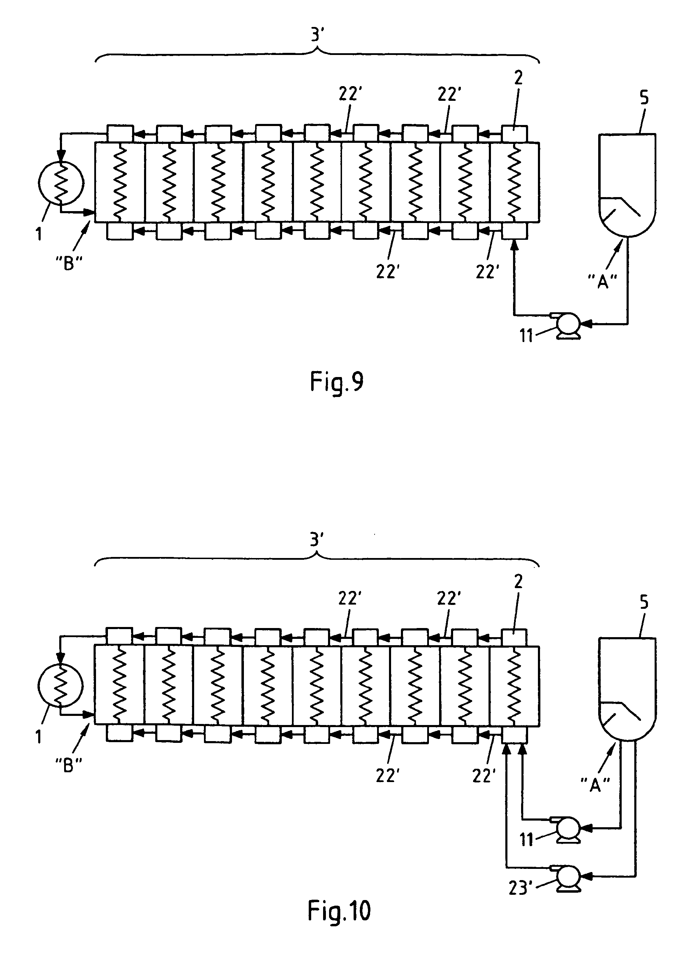

Starting from this point of view, the 'bypass technology' has been improved creating several shorter by-pass lines 22' between the distillation stages 2('water boxes') of the heat recovery section 3 as shown in Figs. 9 and 10. Again, in Fig. 10, an additional smaller pump 23' is arranged in parallel to the existing pump 11. These shorter 'water box interconnection lines' are still functioning as a bypass but are now simultaneously reducing the temperature of cooling brine entering into the individual stages 2 and permit to recover additional heat in each distillation stages 2. Consequently, the reduction of the desalination efficiency due to higher water production is minimized and appears to be more acceptable from both the economical and the thermodynamic point of view.

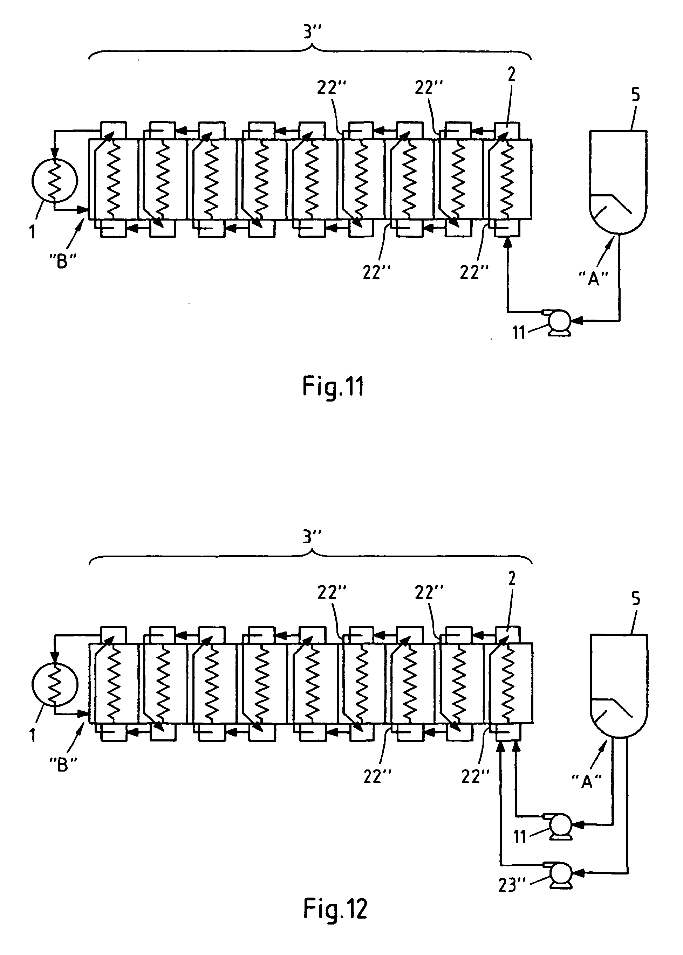

Fig. 11 shows another embodiment of the present invention, referring to the bypass line 22" of each single 'water box', wherein each bypass line 22' is arranged between the inlet and the outlet of the respective box. Another preferred embodiment of the present invention shows that such a circuit can include an additional brine re-circulating pump 23", as can be seen in Fig. 12.

It should be noted that the scope of the present invention is not limited to the preferred embodiments shown, rather, any other bypass arrangements and/or any combinations thereof are included.

As appears from this description, it has to be paid particular attention to recover the maximum heat coming from the steam released in a evaporating stages, but the present invention is not limited to the thermodynamic optimization of the plant.

## Claims

1. A method for the desalination of salt water using at least a brine heater, a desalination zone of multi-stage flash (MSF) distillation units and at least one separate deaerator, wherein sea water is being deaerated and is pumped as a recirculating brine into a heat recovery section, where the evaporated brine is being condensed and the distillate is won, **characterized in that** the heat recovery section is at least partially bypassed by a part of the recirculating brine, wherein said part of the recirculating brine enters the brine heater.

2. The method according to claim 1, **characterized in that** the bypass flow is being varied to control the flow rate of the bypassed brine.

3. A plant for the desalination of salt water with at least a brine heater (1), a desalination zone of multi-stage flash (MSF) distillation units (2) and at least one deaerator (5), wherein the desalination zone comprises a heat recovery section (3) for condensing the evaporated brine and winning the distillate, **characterized by** providing at least one bypass line (22) bypassing at least a part of the heat recovery section (3) and entering the brine heater (1).

4. The plant according to claim 3, **characterized by** several bypass lines between different distillation units (2).

5. The plant according to claim 4, **characterized in that** the several bypass lines (22') are arranged between adjacent distillation stages (2).

6. The plant according to claim 4, **characterized by** a bypass line (22") for each single distillation stage (2).

7. The plant according to one of the claims 3 to 6, **characterized by** an additional pump (23, 23', 23") for the recirculating brine.

8. The plant according to one of the claims 3 to 7, **characterized in that** at least one bypass line consists of a pipe, the inner diameter of which is variable for alterating the flow of the recirculating brine.

9. The plant according to claim 8, **characterized by** at least one valve for alterating the flow of the recirculating brine.

10. The plant according to claim 8, **characterized by** at least one perforated plate for alterating the flow of the recirculating brine.

## Patentansprüche

1. Verfahren zur Entsalzung von Salzwasser unter Verwendung wenigstens eines Soleerhitzers, einer Entsalzungszone von Mehrstufen-Entspannungs (MSF)-Destillationseinheiten und wenigstens einer separaten Entlüftungseinrichtung, wobei Meerwasser entlüftet wird und als eine Umlaufsole in einen Wärmerückgewinnungsabschnitt gepumpt wird, wo verdampfte die Sole kondensiert wird und das Destillat gewonnen wird, **dadurch gekennzeichnet, dass** der Wärmerückgewinnungsabschnitt von einem Teil der Umlaufsole wenigstens teilweise umgangen wird, und wobei dieser Teil der Umlaufsole in den Soleerhitzer eintritt.

2. Verfahren nach Anspruch 1, **dadurch gekennzeichnet, dass** der Umgehungsfluss verändert wird, um die Durchflussrate der umgeleiteten Sole zu steuern.

3. Anlage zur Entsalzung von Salzwasser mit wenigstens einem Soleerhitzer (1), einer Entsalzungszone von Mehrstufen-Entspannungs (MSF)-Destillationseinheiten (2) und wenigstens einer Entlüftungseinrichtung (5), wobei die Entsalzungszone einen Wärmerückgewinnungsabschnitt (3) zum Kondensieren der verdampften Sole und Gewinnen des Destillats umfasst, **gekennzeichnet durch** Bereitstellen wenigstens einer Umgehungsleitung (22), die wenigstens einen Teil des Wärmerückgewinnungsabschnitts (3) umgeht und in den Soleerhitzer (1) eintritt.

4. Anlage nach Anspruch 3, **gekennzeichnet durch** mehrere Umgehungsleitungen zwischen verschiedenen Destillationseinheiten (2).

5. Anlage nach Anspruch 4, **dadurch gekennzeichnet, dass** die mehreren Umgehungsleitungen (22') zwischen benachbarten Destillationsstufen (2) angeordnet sind.

6. Anlage nach Anspruch 4, **gekennzeichnet durch** eine Umgehungsleitung (22") für jede einzelne Destillationsstufe (2).

7. Anlage nach einem der Ansprüche 3 bis 6, **gekennzeichnet durch** eine zusätzliche Pumpe (23, 23', 23") für die Umlaufsole.

8. Anlage nach einem der Ansprüche 3 bis 7, **dadurch gekennzeichnet, dass** wenigstens eine Umgehungsleitung aus einem Rohr besteht, dessen Innendurchmesser veränderlich ist, um den Durchfluss der Umlaufsole zu ändern.

9. Anlage nach Anspruch 8, **gekennzeichnet durch** wenigstens ein Ventil zum Ändern des Durchflusses der Umlaufsole.

10. Anlage nach Anspruch 8, **gekennzeichnet durch** wenigstens eine Lochplatte zum Ändern des Durchflusses der Umlaufsole.

## Revendications

1. Procédé de désalinisation de l'eau salée à l'aide d'au moins un réchauffeur de saumure, une zone de désalinisation d'unités de distillation à système flash (MSF) et au moins un désaérateur séparé, où l'eau de mer est désaérée et est pompée comme saumure de recirculation dans une partie de récupération de chaleur, où la saumure évaporée est condensée et le distillat est récupéré, **caractérisé en ce que** la partie de récupération de chaleur est au moins partiellement contournée par une partie de la saumure en recirculation, où ladite partie de la saumure en recirculation entre dans le réchauffeur de saumure.

2. Procédé selon la revendication 1, **caractérisé en ce que** l'écoulement du contournement est varié pour contrôler le débit de la saumure contournée.

3. Installation de désalinisation de l'eau salée avec au moins un réchauffeur de saumure (1), une zone de désalinisation d'unités de distillation à système flash (MSF) (2) et au moins un désaérateur (5), où la zone de désalinisation comprend une partie de récupération de chaleur (3) pour condenser la saumure évaporée et obtenir le distillat, **caractérisée par** au moins une conduite de contournement (22), évitant au moins une partie de la partie de récupération de chaleur (3) et entrant dans le réchauffeur de saumure (1).

4. Installation selon la revendication 3, **caractérisée par** plusieurs conduites de contournement entre les différentes unités de distillation (2).

5. Installation selon la revendication 4, **caractérisée en ce que** les différentes conduites de contournement (22') sont disposées entre les étapes adjacentes de distillation (2).

6. Installation selon la revendication 4, **caractérisée par** une conduite de contournement (22") pour chaque étape de distillation (2).

7. Installation selon l'une quelconque des revendications 3 à 6, **caractérisée par** une pompe supplémentaire (23, 23', 23" ) pour le saumure en recirculation.

8. Installation selon l'une quelconque des revendications 3 à 7, **caractérisée en ce qu'**au moins une conduite de contournement consiste en un tube, dont le diamètre interne est variable pour modifier l'écoulement de la saumure en recirculation.

9. Installation selon la revendication 8, **caractérisée par** au moins une vanne pour modifier l'écoulement de la saumure en recirculation.

10. Installation selon la revendication 8, **caractérisée par** au moins une plaque perforée pour modifier l'écoulement de la saumure en recirculation.
